(19) Europäisches Patentamt
European Patent Office
Office européen des brevets

(11) **EP 4 124 842 B1**

(12) **EUROPEAN PATENT SPECIFICATION**

(45) Date of publication and mention
of the grant of the patent:
**20.11.2024 Bulletin 2024/47**

(21) Application number: **20927520.5**

(22) Date of filing: **25.12.2020**

(51) International Patent Classification (IPC):
*G01M 17/02* *(2006.01)*   *B60C 11/24* *(2006.01)*
*B60C 19/00* *(2006.01)*

(52) Cooperative Patent Classification (CPC):
**B60C 11/246; G01M 17/02;** B60C 2019/004

(86) International application number:
**PCT/JP2020/048867**

(87) International publication number:
**WO 2021/192474 (30.09.2021 Gazette 2021/39)**

(54) **METHOD FOR ESTIMATING TIRE WEAR AND METHOD FOR DETERMINING TIRE WEAR SHAPE**

VERFAHREN ZUR SCHÄTZUNG DES REIFENVERSCHLEISSES UND VERFAHREN ZUR BESTIMMUNG DER REIFENVERSCHLEISSFORM

PROCÉDÉ DESTINÉ À ESTIMER L'USURE D'UN PNEU ET PROCÉDÉ DESTINÉ À DÉTERMINER LA FORME D'USURE D'UN PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.03.2020 JP 2020054835**

(43) Date of publication of application:
**01.02.2023 Bulletin 2023/05**

(73) Proprietor: **BRIDGESTONE CORPORATION**
**Chuo-ku**
**Tokyo 104-8340 (JP)**

(72) Inventor: **NISHIYAMA Kenta**
**Tokyo 104-8340 (JP)**

(74) Representative: **Marks & Clerk LLP**
**15 Fetter Lane**
**London EC4A 1BW (GB)**

(56) References cited:
| | |
|---|---|
| WO-A1-2009/008502 | WO-A1-2009/157516 |
| JP-A- 2009 019 950 | JP-A- 2011 168 211 |
| JP-A- 2013 136 297 | JP-A- 2020 032 990 |
| JP-A- H10 115 578 | US-A1- 2010 186 492 |
| US-A1- 2011 118 989 | US-A1- 2018 188 025 |

**Description**

TECHNICAL FIELD

The present invention relates to a method for estimating a degree of wear of a tire and a method for determining whether a wear shape of the tire during travelling is center wear or not.

BACKGROUND ART

Conventionally, as a method for estimating a degree of wear of a tire, there has been proposed a method which includes disposing an acceleration sensor inside the tire; calculating an index of deformation velocity at a contact edge of the tire, the index being magnitude of one of or both of positive and negative peaks detected by the acceleration sensor and appearing in a differential waveform of acceleration in a radial direction around the contact edge; calculating a contact time ratio of contact time to rotation time of the tire, the contact time being a time interval between the positive peak and the negative peak, and the rotation time of the tire being a time interval between either of the positive peaks or the negative peaks; and estimating the degree of wear of the tire from the calculated index of deformation velocity and the contact time ratio and maps which have been obtained in advance and which represent relationships among a residual groove amount which is the degree of wear of the tire, the index of deformation velocity and the contact time ratio (See, for example, Patent Document 1). Attention is also drawn to the disclosures of US2010/186492A1, JP2013-136297A and JP2011-168211A.

CITATION DOCUMENT

Patent Document

Patent Document 1: WO2009/008502A1

SUMMARY OF THE INVENTION

Technical Problem

However, there has been a problem that, as in the above-mentioned Patent Document 1, when the residual groove amount of the tire is estimated from the index of the deformation velocity and the contact time ratio, with a tire whose wear shape is the center wear, an actual residual groove amount is detected to be shifted toward a new tire side (the estimated wear amount becomes smaller than the actual wear amount).

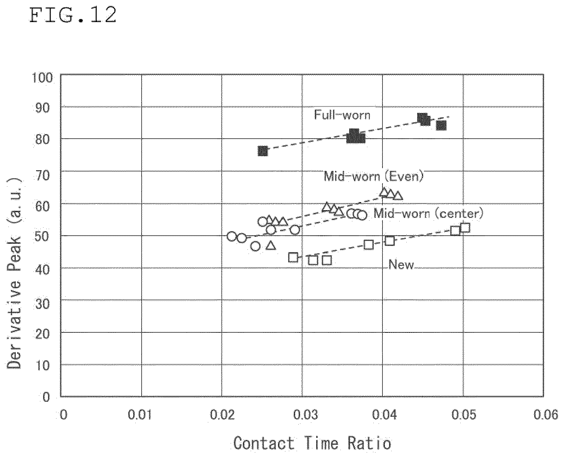

Fig. 12 is a diagram illustrating a relationship between a derivative peak value (Derivative Peak) of acceleration in the tire radial direction and the contact time ratio (Contact Time Ratio), which were measured by running, at a constant velocity, a vehicle equipped with four types of test tires, namely, a new tire (□; New), two types of tires (∘, △; Mid-worn) whose wear shape is different from each other and whose residual groove amount is half of the new tire, and a tire worn to near a slip sign (■; Full- worn). In the figure, the mark ∘ (circle) indicates a tire whose wear shape is center wear (Center), and the mark △ (triangle) indicate a tire whose wear shape is even wear (Even). In this embodiment, by varying the load, derivative peak values of the acceleration in the tire radial direction in plural contact time ratios were measured.
As noted from the figure, the relationship between the index of deformation velocity and the contact time ratio of the tire whose wear shape is the center wear, is shifted toward the new tire side.
The present invention has been made in view of the conventional problem and aims at providing a method for determining whether the wear shape of a tire is the center wear or not, and a method for accurately estimating the degree of wear of the tire during travelling regardless of the wear shape of the tire.

Solution to Problem

A first aspect of the present invention relates to a method for estimating a degree of wear (a residual groove amount or a wear amount) of a tire during travelling, in which the degree of wear is estimated by using: an index of deformation velocity at a tire contact edge or in the vicinity of the tire contact edge, the index of the deformation velocity having been calculated from magnitude (a derivative peak value at a contact edge) of one of or both of positive and negative peaks appearing in a radial acceleration waveform obtained by differentiating a time-series waveform of tire radial acceleration detected by an acceleration sensor mounted on the tire; a contact time ratio of contact time to tire rotation time, the contact time being a time interval between the positive peak and the negative peak, the tire rotation time being a time interval between either of positive peaks or negative peaks; and a deflection amount which is a difference between a tire radius and an effective radius (a distance between the center of the axle and the road surface), the tire radius being a radius of the tire under a non-loaded state and the effective radius being a radius of the tire during travelling.

In this way, since the degree of wear of the tire was estimated by using the deflection amount of the tire as a measure of wear in addition to the index of the deformation velocity and the contact time ratio of the tire during travelling, the degree of wear of the tire can be estimated with high accuracy regardless of whether the wear shape of the tire is the center wear or not.

Incidentally, the degree of wear of the tire may be obtained from a regression formula, which has been obtained in advance, using as variables, the index of deformation velocity, the contact time ratio and the deflection amount, or after determining whether the wear shape is the center wear or not, if it is the center wear, the degree of wear estimated from the index of deformation velocity and the contact time ratio may be corrected.

Alternatively, two master curves, which are a master curve of the even wear and a master curve of the center wear, may be prepared, and the master curve may be selected according to the wear shape.

Another aspect of the invention relates to a tire wear shape determination method as defined in appended claim 7.

BRIEF DESCRIPTION OF THE DRAWINGS

Fig. 1 is a functional block diagram illustrating the configuration of a tire wear estimation device according to a first embodiment of the present invention.

Figs. 2A and 2B are diagrams respectively illustrating an attachment position of an acceleration sensor and a detection direction of acceleration.

Figs. 3A to 3C are diagrams respectively illustrating an acceleration waveform in the tire radial direction, an example of an acceleration differential waveform, and a method for calculating rotation time and contact time.

Fig. 4 is a diagram illustrating an example of an $R_c$-$V_R$ map.

Fig. 5 is a flowchart illustrating a tire wear estimation method according to the first embodiment of the present invention.

Figs. 6A to 6D are diagrams respectively illustrating temporally varying waveforms of tire circumferential acceleration, tire radial acceleration, tire circumferential velocity, and rotation angular velocity.

Figs. 7A to 7C are diagrams respectively illustrating temporally varying waveforms of a rotation angle of a measurement point, front-back direction acceleration and vertical direction acceleration.

Figs. 8A and 8B are diagrams respectively illustrating temporally varying waveforms of a front-back direction velocity and a vertical direction velocity of the measurement point.

Figs. 9A to 9D are diagrams respectively illustrating temporally varying waveforms of displacement of the measurement point in a front-back direction and a vertical direction, and a locus of the measurement point.

Fig. 10 is a diagram illustrating the configuration of a tire wear estimation device according to a second embodiment of the present invention.

Fig. 11 is a schematic diagram illustrating distribution of feature amounts and an identification function which is a separation plane.

Fig. 12 is a map illustrating a relationship between a deformation velocity index and a contact time ratio of tires whose residual groove amount is different from each other.

DESCRIPTION OF EMBODIMENTS

First Embodiment

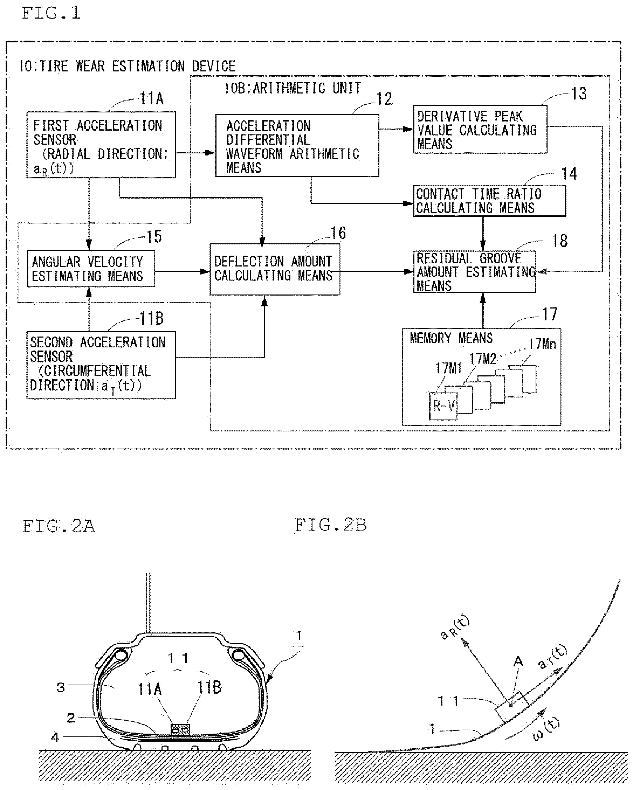

Fig. 1 is a diagram illustrating a configuration of a tire wear estimation device 10 according to a first embodiment of the present invention. The tire wear estimation device 10 includes first and second acceleration sensors 11A and 11B, an acceleration differential waveform arithmetic means 12, a derivative peak value calculating means 13, a contact time ratio calculating means 14, an angular velocity estimating means 15, a deflection amount calculating means 16, a memory means 17, and a residual groove amount estimating means 18.

Each of the means from the acceleration differential waveform arithmetic means 12 to the residual groove amount estimating means 18 is configured by, for example, computer software and memories such as a RAM and the like. Hereinafter, each of the means from the acceleration differential waveform arithmetic means 12 to the residual groove amount estimating means 18 is referred to as an arithmetic unit 10B. In this embodiment, the arithmetic unit 10B was installed on the vehicle body side, but it may be installed inside the tire.

As illustrated in Figs. 2A and 2B, the first and second acceleration sensors 11A and 11B are both housed in a sensor case 11 disposed approximately at the center on a tire air chamber 3 side of an inner liner part 2 of the tire 1, and detect vibrations, as acceleration, input from a road surface to a tread 4.

The first acceleration sensor 11A is so disposed that a detection direction becomes the tire radial direction, and detects tire radial acceleration $a_R$ (t) input from the road surface, and the second acceleration sensor 11B is so disposed that a detection direction becomes the tire circumferential direction and detects tire circumferential acceleration $a_T$ (t). Incidentally, in each figure, the x direction is a vehicle travel direction, the y direction is a vehicle width direction (tire width direction), and the z direction is a vertical direction.

Although a figure is omitted, amplifiers that amplify outputs of the first and second acceleration sensors 11A and 11B, respectively, A/D converters, a transmitter that transmits the A/D-converted signals to the arithmetic unit 10B, and other components are housed in the sensor case 11. In a case where the arithmetic unit 10B was disposed inside the tire 1, namely, in the sensor case 11 or the like, estimation results obtained by the arithmetic unit 10B may be transmitted to a vehicle control unit (not shown) installed on the vehicle body side.

Since sizes of the first and second acceleration sensors 11A and 11B are quite small compared to the size of the tire 1, it can be assumed that these sensors are in approximately the same position. Hereinafter, the position of the first and second acceleration sensors 11A and 11B, shown at a point A in Fig. 2B, is referred to as a measurement point.

The acceleration differential waveform arithmetic means 12 extracts a radial acceleration waveform, which is a time-series waveform of tire radial acceleration detected by the first acceleration sensor 11A, and calculates an acceleration differential waveform, which is a waveform obtained by time-differentiating the extracted radial acceleration waveform.

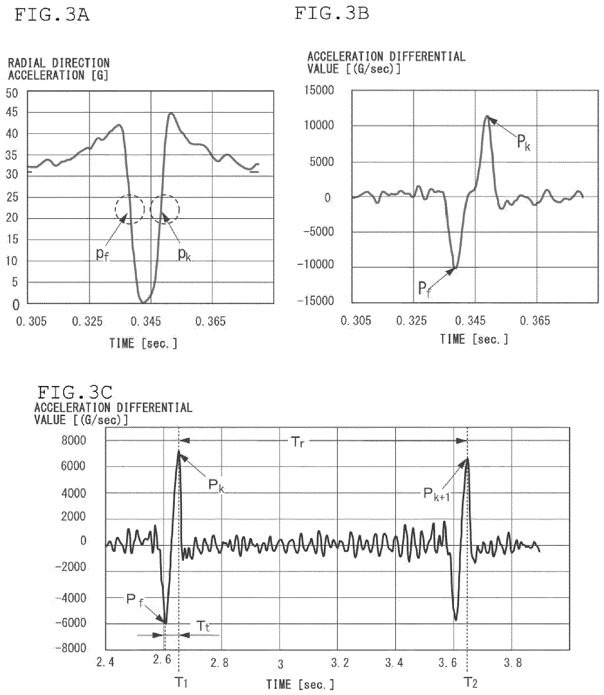

Fig. 3A is a diagram illustrating an example of the radial acceleration waveform, where the horizontal axis is time [sec.] and the vertical axis is acceleration [G]. Of portions enclosed by dashed lines in the figure, a portion where the negative slope becomes maximum is a contact edge $p_\varepsilon$ on a leading-edge side, and a portion where the positive slope becomes maximum is a contact edge $p_k$ on a trailing-edge side.

Fig. 3B is a diagram illustrating an example of the acceleration differential waveform, where the horizontal axis is time [sec.] and the vertical axis is the acceleration differential value [G/sec.]. In this acceleration differential waveform, two peaks appear. A peak appears at the front side of the waveform, namely, appears earlier in time, is the peak $P_f$ on the leading-edge side, and the peak that appears later in time is the peak $P_k$ on the trailing-edge side. The larger the slope of the radial acceleration waveform at the contact edges $P_f$ and $P_k$ is, the larger the magnitude of the peaks $P_f$ and $P_k$ in the acceleration differential waveform become.

As illustrated in Fig. 3C, an interval between the peak $P_f$ on the leading-edge side and the peak $P_k$ on the trailing-edge side in the acceleration differential waveform is contact time $T_t$, and an interval between two temporally adjacent peaks $P_k$ and $P_{k+1}$ on the trailing-edge side is rotation time Twhich is the time the tire rotates one rotation. Incidentally, the rotation time $T_r$ may be obtained from a time interval between the peaks on the leading-edge side.

The derivative peak value calculating means 13 calculates a derivative peak value $V_{Rf}$ on the leading-edge side, which is the magnitude of the peak $P_f$ on the leading-edge side, uses this value as a deformation velocity index $V_R$, and sends this deformation velocity index $V_R$ to the residual groove amount estimating means 18. Incidentally, as the deformation velocity index $V_R$, a derivative peak value $V_{Rk}$ on the trailing-edge side, which is the acceleration differential value on the trailing-edge side, may be used, or an average value of the derivative peak value $V_{Rf}$ on the leading-edge side and the derivative peak value $V_{Rk}$ on the trailing-edge side may be used.

The contact time ratio calculating means 14 calculates the rotation time $T_r$, which is a time difference between time $T_1$ when the trailing-edge side peak $P_k$ has appeared and time $T_2$ when this trailing-edge side peak appears again after one rotation of the tire 1, and the contact time $T_t$, which is the time between the leading-edge side peal $P_f$ and the trailing-edge side peak $P_k$, and calculates the contact time ratio $R_c$ obtained by dividing the calculated contact time Tt by the rotation time $T_r$. The calculated contact time ratio $R_c$ is sent to the residual groove amount estimating means 18. Incidentally, $T_r = T_2 - T_1$, and $R_c = (T_t/T_r)$.

The angular velocity estimating means 15 estimates a rotation angular velocity $\omega(t)$ of the tire 1 from the tire radial acceleration $a_R(t)$ and the tire circumferential acceleration $a_T(t)$ respectively detected by the first and second acceleration sensors11A and 11B.

The deflection amount calculating means 16 calculates the locus of the measurement point A from the tire radial acceleration $a_R(t)$ and the tire circumferential acceleration $a_T(t)$ respectively detected by the first and second acceleration sensors 11A and 11B, and from the rotation angular velocity $\omega(t)$ estimated by the angular velocity estimating means 15, obtains an outer shape of the tire 1, which is a vertical sectional shape of the tire 1 during travelling, and estimates a deformation amount d from this outer shape of the tire 1. The deflection amount d can be expressed as d = R - $R_{eff}$, where R is a tire radius which is the radius of the tire 1 under a non-loaded state, and $R_{eff}$ is an effective radius which is the radius of the tire during travelling.

The method for estimating the rotation angular velocity $\omega(t)$ and the method for calculating the deflection amount d will be described later.

The memory means 17 stores a plurality of $R_c$-$V_R$ maps $17M_1$ to $17M_n$ which have been obtained in advance.

The $R_c$-$V_R$ maps $17M_1$ to $17M_n$ are maps for estimating the degree of wear of the tire 1 and are created for each deflection amount $d_k$ (k = 1 to n). In this embodiment, the residual groove amount H is used as the degree of wear, however, a wear amount M may be used as the degree of wear. The wear amount M is expressed as M = $H_0$ - H, where $H_0$ is the groove depth of the tire 1 when the tire 1 is new and H is the residual groove amount.

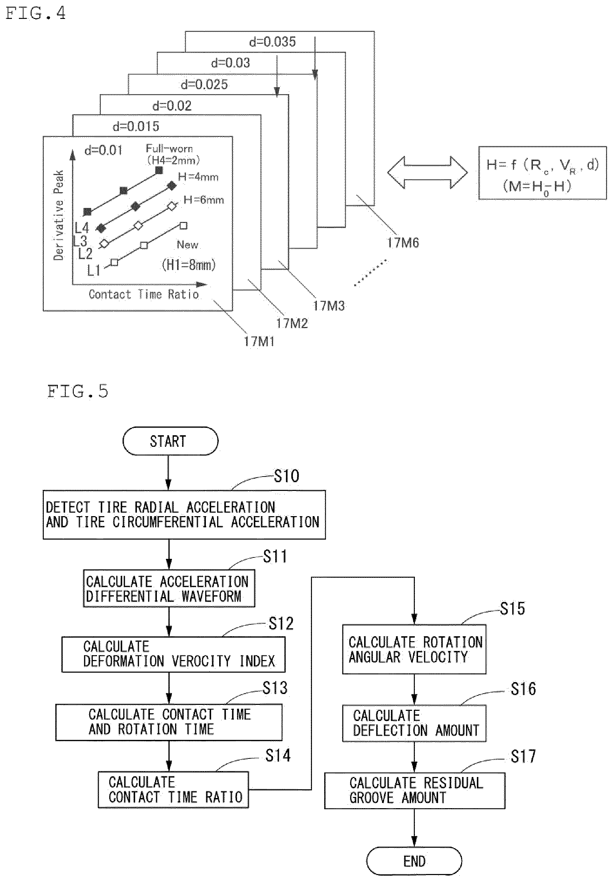

As illustrated in Fig. 4, in the $R_c$-$V_R$ map $17M_k$ in which the deflection amount is $d_k$, a master line $L_j$ representing a relationship, which has been obtained in advance, between the contact time ratio $R_c$ and the deformation velocity index $V_R$ of a worn tire with the residual groove amount $H_j$ is drawn on a plane where the horizontal axis is the contact time ratio $R_c$ and the vertical axis is the deformation velocity index $V_R$. In this embodiment, the master line $L_j$ was set to four lines (j = 1-4) which are $H_1$ = 8 mm (New), $H_2$ = 6 mm, $H_3$ = 4 mm and $H_4$ = 2mm (Full-worn), but may be three lines (New, Mid-worn, Full-worn) or five lines or more.

The $R_c$-$V_R$ maps $17M_1$ to $17M_n$ can be obtained by using data of the contact time ratio $R_c$, data of the deformation velocity index $V_R$, and data of the deflection amount d, which are the data of the time when a vehicle equipped with multiple test tires including a new tire (New) and a tire worn close to the slip sign (Full-worn), which are different in the residual groove amount $H_M$ and the wear shape, was run under various load states.

In the case of shoulder wear, if the residual groove amount of the center part is almost the same with a residual groove amount of even wear, the contact time ratio $R_c$, the deformation velocity index $V_R$, and the deflection amount d become almost the same as in the case of the even wear, hence in this embodiment, as the wear shape, two types of wear shapes were used, which were the center wear and the even wear.

The residual groove amount estimating means 18 estimates the residual groove amount H, which is the degree of wear of the tire 1, by using the deformation velocity index $V_R$ calculated by the derivative peak value calculating means 13, the contact time ratio $R_c$ calculated by the contact time ratio calculating means 14, the deflection amount d calculated by the deflection amount calculating means 16, and the $R_c$-$V_R$ maps $17M_1$ to $17M_n$ which have been stored in the memory means 17.

As described above, the $R_c$-$V_R$ maps $17M_1$ to $17M_n$ were obtained by using the tire radial acceleration $a_R$ (t) and the tire circumferential acceleration $a_T$ (t), which were detected by running the vehicle equipped with the test tires which are different in the residual groove amount H and the wear shape. Thus, by using the $R_c$-$V_R$ maps $17M_1$ to $17M_n$, it is possible to accurately estimate the residual groove amount H regardless of whether the wear shape is the center wear or not.

Incidentally, as illustrated in Fig. 4, the residual groove amount H of tire 1 may be estimated by using, instead of the $R_c$-$V_R$ maps $17M_1$ to $17M_n$, a regression formula H = F ($R_c$, $V_R$, d), which has been obtained in advance, of the residual groove amount H. In the regression formula, three of the contact time ratio $R_c$, the deformation velocity index $V_R$ and the deflection amount d are used, as variables. This regression formula H = F ($R_c$, $V_R$, d) can also be obtained by using, similar to the above-mentioned $R_c$-$V_R$ maps $17M_1$ to $17M_n$, the tire radial acceleration $a_R$(t) and the tire circumferential acceleration $a_T$(t), which were detected by running the vehicle equipped with the test tires which are different in the residual groove amount H and the wear shape. Therefore, the residual groove amount H of the tire 1 in question can also be accurately estimated by using the regression formula H = F ($R_c$, V R, d).

Next, the method for estimating the tire wear according to the first embodiment of the present invention will be described with reference to the flowchart in Fig. 5. In estimating the degree of wear, it is assumed that the vehicle equipped with the tire 1 is traveling straight on a flat road surface at a constant velocity $V_0$.

First, the first and second acceleration sensors 11A and 11B disposed in the inner liner part 2 of the tire 1 respectively detect the tire radial acceleration $a_R$(t) and the tire circumferential acceleration $a_T$(t), which are input from the road surface to the tire 1 (Step S10).

Next, the acceleration differential waveform, which is the waveform obtained by time-differentiating the tire radial acceleration $a_R$(t), is obtained (Step S11), and the derivative peak value $V_{Rf}$ on the leading-edge side, which is the magnitude of the peak $P_f$ on the leading-edge side of this acceleration differential waveform, is calculated, and this is used as the deformation velocity index $V_R$ (Step S12). Furthermore, after calculating the contact time $T_t$ which is the interval between the peak $P_f$ on the leading-edge side and the peak $P_k$ on the trailing-edge side and the rotation time $T_r$ which is the interval between two peaks $P_{k1}$ and $P_{k2}$ on the trailing-edge side, in the acceleration differential waveform (Step S13), the contact time ratio $R_c$, which is the ratio of the contact time Tt to the rotation time $T_r$, is calculated (Step S14). The contact time ratio $R_c$ can be expressed as $T_t/T_r$.

Next, from the tire radial acceleration $a_R$ (t) and the tire circumferential acceleration $a_T$(t) detected in Step S10 above, the rotation angular velocity $\omega(t)$ of the tire 1 is calculated (Step S15). Then, from the tire radial acceleration $a_R$(t), the tire circumferential acceleration $a_T$ (t) and the rotation angular velocity $\omega(t)$, the deflection amount d of the tire 1 is calculated (Step S16).

Incidentally, the calculation of the deformation velocity index $V_R$, the calculation of the contact time ratio $R_c$ and the calculation of the deflection amount d are not necessarily be performed in this order, and the sequential order may be changed, or may be processed in parallel.

Finally, by using the deformation velocity index $V_R$ calculated in Step S13, the contact time ratio $R_c$ calculated in Step S15, the deflection amount d calculated in Steps S16-S17, and the $R_c$-$V_R$ maps $17M_1$ to $17M_n$ which have been obtained in advance, the residual groove amount H, which is the degree of wear of the tire 1, is estimated (Step S17).

The method for estimating the rotation angular velocity $\omega(t)$ in Step S15 is as follows.

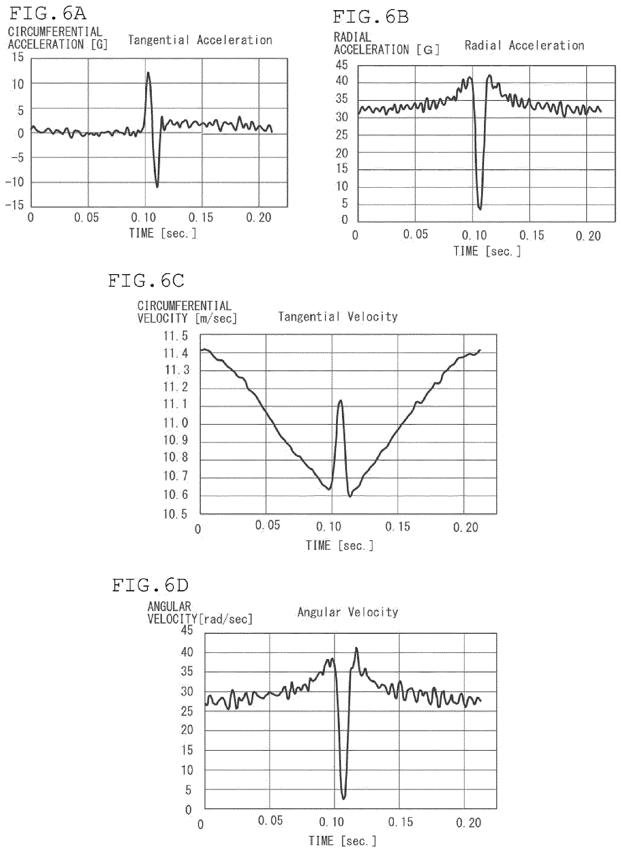

First, as illustrated in Figs. 6A and 6B, from the tire radial acceleration $a_R(t)$ and the tire circumferential acceleration $a_T(t)$, a waveform corresponding to one rotation of the tire 1 is cut out, respectively.

Next, from the tire circumferential acceleration $a_T(t)$, the tire circumferential velocity $v(t)$ is calculated by using the following equation (1).

$$v(t) = \int_0^t a_T(s)\, ds + V_0 \quad \cdots\cdots (1)$$

where, $V_0$ is the vehicle velocity, which can be calculated from the tire rotation period, the tire radius, GPS data, and so on. For $v(t)$, preprocessing such as centering may be performed.

As illustrated in Fig. 6C, it is noted that the tire circumferential velocity $v(t)$ decreases as approaching the leading-edge, increases again as entering the contact area, but decreases again from near the center of the contact area, reaches the minimum at the trailing-edge, and thereafter increases.

Next, from the tire radial acceleration $a_R(t)$ and the tire circumferential velocity $v(t)$, the rotation angular velocity $\omega(t)$ of the tire 1 is estimated by the following equation (2).

$$\omega(t) = a_R(t)/v(t) \quad \cdots\cdots (2)$$

Fig. 6D illustrates the temporal variation of the estimated value of the rotation angular velocity $w(t)$.

The equation (2) above was derived on the assumption that the sensor (measurement point A) is in a uniform circular motion at a given time t. The acceleration $a_R(t)$ and the velocity $v(t)$ when the measurement point A is in the uniform circular motion can be expressed by the following equation.

$$a_R(t) = v^2(t) / R(t)$$

$$v(t) = R(t)\, \omega(t)$$

where $R(t)$ is the radius of curvature at the time t.

The above equation (2) can be obtained by eliminating $R(t)$ from the above two equations and solving for $\omega(t)$.

Next, an explanation is given as to the method for calculating the deflection amount d in Step S16.

In this embodiment, the deflection amount d is calculated from the locus of the measurement point A.

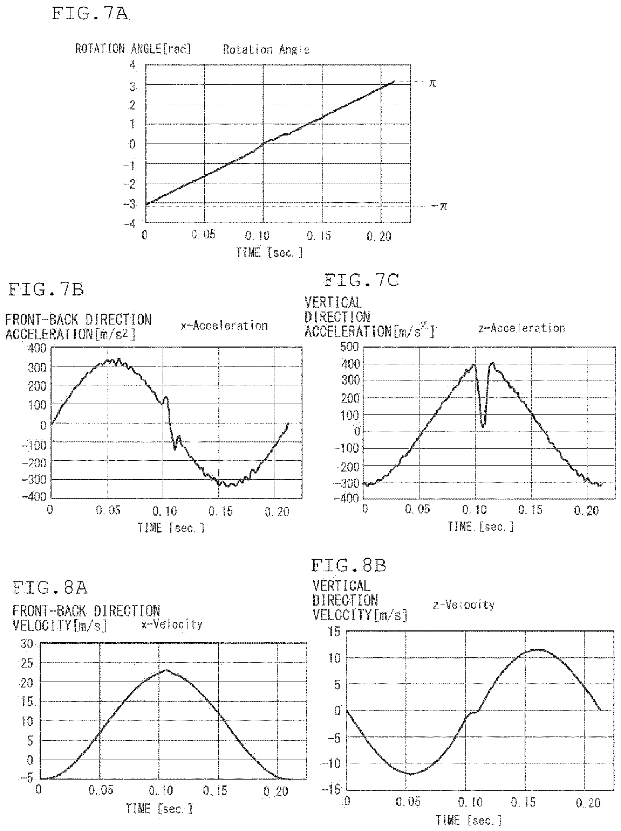

First, an estimated value of the rotation angular velocity $\omega(t)$ is integrated by using the following equation (3) to obtain a temporally-varying waveform of a rotational angle $\Theta$. The rotation angle $\theta$ of the measurement point is, as illustrated in Fig. 7A, a rotation angle of the measurement point A when viewed from the center of the tire 1, of which initial value $\theta_0$ may be set to any suitable values such as 0 (contact center) or $-\pi$ (uppermost part) or other values.

$$\theta(t) = \int_0^t \omega_T(s)\, ds + \theta_0 \quad \cdots\cdots (3)$$

Fig. 7A is a diagram illustrating the temporal variation of the rotation angle $\theta(t)$. As noted from the figure, the rotation angle $\theta(t)$ varies almost linearly, but near the contact center circled in the figure (near t = 0.1 sec), the change thereof becomes small in correspondence with the rotation angular velocity $\omega(t)$ that becomes small.

Next, as shown in the equations (4) and (5) below, by using the above-mentioned rotation angle $\theta(t)$, the tire radial acceleration $a_R(t)$ and the tire circumferential acceleration $a_T(t)$ are coordinate-transformed to acceleration in the front-back direction $a_x(t)$ and acceleration in the vertical direction $a_z(t)$, which are the accelerations of a global coordinate system (x, z). The global coordinate system (x, z) is the coordinate system with the x direction being the vehicle travel direction, the y direction being the vehicle width direction (tire width direction) and the z direction being the vertical direction, which are illustrated in Figs. 2A and 2B.

$$a_x(t) = a_T(t)\cos\theta(t) - a_R(t)\sin\theta(t) \quad \cdots\cdots (4)$$

$$a_z(t) = a_T(t)\sin\theta(t) + a_R(t)\cos\theta(t) \quad \cdots\cdots (5)$$

Temporally-varying waveforms of the acceleration $a_x(t)$ in the front-back direction and the acceleration $a_z(t)$ in the vertical direction are illustrated in Figs. 7B and 7C.

Next, the accelerations transformed to the global coordinate system are integrated and the front-back direction velocity $v_x(t)$ and the vertical direction velocity $v_z(t)$ of the measurement point A are calculated by using the following equations (6) and (7).

$$v_x(t) = \int_0^t a_x(s)\,ds + v_{x0} \quad \cdots\cdots (6)$$

$$v_z(t) = \int_0^t a_z(s)\,ds + v_{z0} \quad \cdots\cdots (7)$$

However, $a_x(t)$ and $a_z(t)$ may involve a preprocessing such as centering. Furthermore, initial values $v_{x0}$ and $v_{z0}$ may be set to any values.

The temporally-varying waveforms of the front-back direction velocity $v_x(t)$ and the vertical direction velocity $v_z(t)$ are illustrated in Figs. 8A and 8B.

Furthermore, the velocities are integrated and displacement $u_x(t)$ in the front-back direction and displacement $u_z(t)$ in the vertical direction are calculated by using the following equations (8) and (9).

$$u_x(t) = \int_0^t v_x(s)\,ds + u_{x0} \quad \cdots\cdots (8)$$

$$u_z(t) = \int_0^t v_z(s)\,ds + u_{z0} \quad \cdots\cdots (9)$$

However, $v_x(t)$ and $v_z(t)$ may involve the preprocessing such as the centering. Furthermore, the initial values $u_x0$ and $u_z0$ may be set to any values.

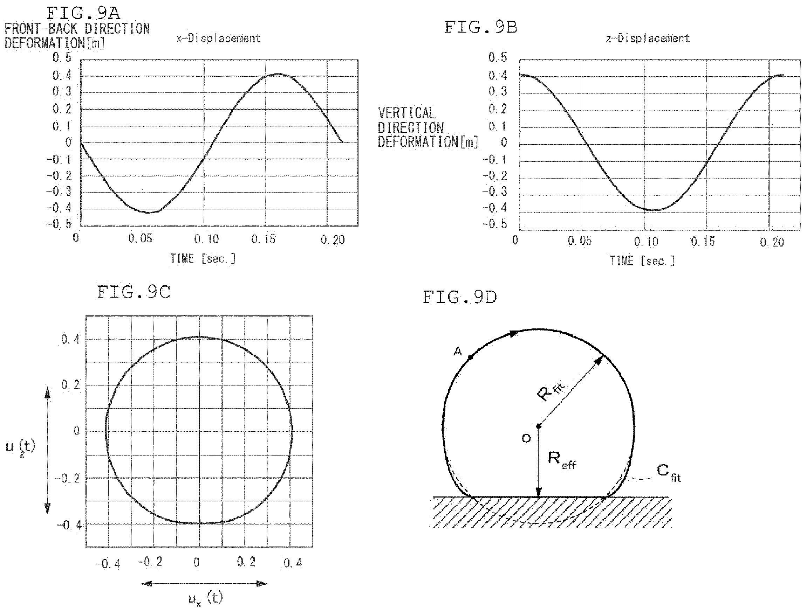

The temporally-varying waveforms of the displacement $u_x(t)$ in the front-back direction and the displacement $u_z(t)$ in the vertical direction are illustrated in Figs. 9A and 9B.

Then, by excluding the time component and drawing the displacement $u_x(t)$ and $u_z(t)$ in a two-dimensional plane, the locus of the measurement point A is obtained as illustrated in Fig. 9C.

A regression circle $C_{fit}$ is obtained by fitting the circle with respect to the locus of the measurement point A, and a regression radius $R_{fit}$, which is the radius of the regression circle $C_{fit}$, is obtained, and also an effective radius $R_{eff}$, which is the radius of the tire 1 in the deflected state, is obtained. In this embodiment, as illustrated in the schematic diagram of Fig. 9D, the effective radius $R_{eff}$ was set to be the minimum value of the distance from the center O of the regression circle $C_{fit}$ to the measurement point A, as shown by the dashed line in the figure.

Finally, the deflection amount d is calculated by using the following equation.

$$d = R_{fit} - R_{eff}$$

Incidentally, as the deflection amount d for estimating the degree of wear, or a feature amount to be used in the center wear determination described later, either the deflection amount d or a deflection ratio $k_d = d/R_{fit}$ may be appropriate.

Second Embodiment

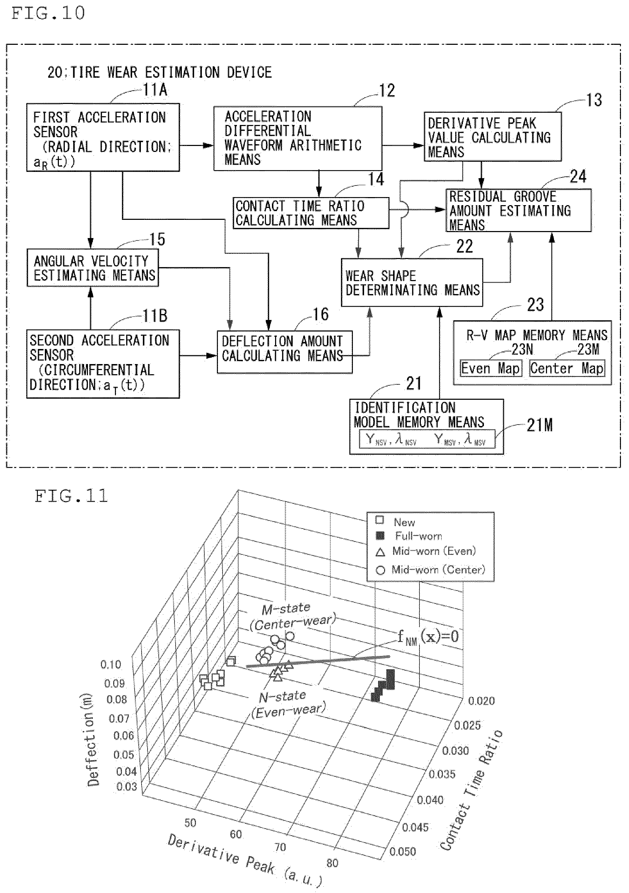

Fig. 10 is a diagram illustrating the configuration of a tire wear estimation device 20 according to a second embodiment of the present invention. In this figure, 11A and 11B are first and second acceleration sensors, 12 is an acceleration differential waveform arithmetic means, 13 is a derivative peak value calculating means, 14 is a contact time ratio calculating means, 15 is an angular velocity estimating means, 16 is a deflection amount calculating means, 21 is an identification model memory means, 22 is a wear shape determining means, 23 is an R-V map memory means, and 24 is a residual groove amount estimating means.

Since from the first and second acceleration sensors 11A and 11B to the deflection amount calculating means 16, each of which is denoted by the same reference sign as that in the first embodiment, have the same configurations as that in the first embodiment, explanations thereof are omitted.

The identification model memory means 21 stores a wear shape identification model 21M which has been obtained in advance.

As illustrated in Fig. 11, the wear shape identification model 21M has a reference feature vector $Y_{ZSV}$ for separating by an identification function $f_m$ (x) for identifying whether the wear shape of the tire 1 is the even wear (Even wear; hereinafter referred to as N state) or the center wear (Center wear; hereinafter referred to as M state), and a Lagrange multiplier $\lambda_Z$ for weighting the reference feature vector Yzsv (Z = N or M).

After obtaining feature vectors Yz = ($R_{cZ}$, $V_{RZ}$, dz) composed of data of the contact time ratio $R_c$, data of the deformation velocity index $V_a$ and data of the deflection amount d, which were obtained when a vehicle equipped with multiple test tires of different residual groove amounts H and different wear shapes was run under various loading states, the reference feature vector Yzsv and the Lagrange multiplier $\lambda_Z$ are obtained by a support vector machine (SVM) using these feature vectors $Y_z$ as learning data.

The wear shape determining means 22, after calculating the Kernel functions $K_N$ (X, $Y_{NSV}$) and $K_M$ (X, $Y_{MSVV}$) by using the feature vector X ($R_c$, $V_R$, d) composed of the deformation velocity index $V_R$ calculated by the derivative peak value calculating means 13, the contact time ratio $R_c$ calculated by the contact time ratio calculating means 14 and the deflection amount d calculated by the deflection amount calculating means 16, and the support vectors $Y_{NSV}$ and $Y_{MCVV}$ and the Lagrange multipliers $\lambda_N$ and $\lambda_M$ stored in the identification model memory means 21, obtains the value of the identification function $f_{NM}$ (x) for identifying the wear shape of the tire by using these Kernel functions $K_N$ (X, $Y_{NSV}$) and $K_M$ (X, $Y_{MSVV}$), and determines, from the value of the identification function $f_{NM}$ (x), whether the wear shape of the tire 1 is the N state (even wear) or the M state (center wear). A result of the determination by the wear shape determining means 22 is sent to the residual groove amount estimating means 24.

Incidentally, as the Kernel functions $K_N$ and $K_M$, a Gaussian kernel or the like is suitably used, for example.

The R-V map memory means 23 stores a first $R_c$-$V_R$ map 23N (Even-Map) and a second $R_c$-$V_R$ map 23M (Center-Map), which have been obtained in advance, in which a first master line $L_{Nj}$ and a second master line $L_{Mj}$ are respectively drawn on a plane whose horizontal axis being the contact time ratio $R_c$ and whose vertical axis being the deformation velocity index $V_R$. The first master line $L_{Nj}$ represents the relationship between the contact time ratio $R_c$ and the deformation velocity index $V_R$ of a worn tire whose residual groove amount is $H_j$ and whose wear shape is the even wear, and the second master line $L_{Mj}$ represents the relationship between the contact time ratio $R_c$ and the deformation velocity index $V_R$ of a worn tire whose residual groove amount is $H_j$ and whose wear shape is the center wear.

Each of the first and second $R_c$-$V_R$ maps 23N and 23M is a map for estimating the degree of wear from the contact time ratio $R_c$ and the deformation velocity index $Y_R$. The first $R_c$-$V_R$ map 23M is obtained by using the data of the contact time ratio $R_c$ and the data of the deformation velocity index $V_R$ obtained when the vehicle, which was equipped with plural test tires whose wear shape is the even wear and whose residual groove amount H is different from each other, was run under various load conditions.

On the other hand, the second $R_c$-$V_R$ map 23M is obtained by using the data of the contact time ratio $R_c$ and the data of the deformation velocity index $V_R$ obtained when the vehicle, which was equipped with plural test tires whose wear shape is the center wear and whose residual groove amount H is different from each other, was run under the various load conditions.

The residual groove amount estimating means 24 estimates the residual groove amount H, which is the degree of wear of the tire 1, by using the deformation velocity index $V_R$ calculated by the derivative peak value calculating means 13, the contact time ratio $R_c$ calculated by the contact time ratio calculating means 14, and the first $R_c$-$V_R$ map 23N or the second $R_c$-$V_R$ map 23M having been stored in the R-V map memory means 23.

More specifically, in a case where the wear shape of the tire 1 was determined to be the even wear by the wear shape determining means 22, the residual groove amount estimating means 24 estimates the residual groove amount H, which is the degree of wear of the tire 1, by using the above-mentioned calculated deformation velocity index $V_R$, the contact time ratio $R_c$ and the first $R_c$-$V_R$ map 23N. In a case where the wear shape was determined to be the center wear, the residual groove amount estimating means 24 estimates the residual groove amount H, which is the degree of wear of the tire 1, by using the above-mentioned calculated deformation velocity index $V_R$, the contact time ratio $R_c$ and the second $R_c$-$V_R$ map 23M.

As described above, after calculating the deformation velocity index $V_R$ by the derivative peak value calculating means 13, the contact time ratio $R_c$ by the contact time ratio calculating means 14 and the deflection amount d by the deflection amount calculating means 16, the determination was made as to whether the wear shape of the tire is the even wear or the center wear by using a machine learning algorithm, on the basis of the feature amount vector X ($R_c$, $V_R$, d) composed of the above-mentioned calculated deformation velocity index $V_R$, the contact time ratio $R_c$ and the deflection amount d, and the determination model (wear shape identification model 21M), which has been obtained in advance for each wear shape and which is structured with, as learning data, the support vector Yz = ($R_{cZ}$, $V_{RZ}$, $d_Z$) which is the feature amount vector. Hence, the wear shape of the tire 1 can be determined accurately.

In addition, since the degree of wear of the tire 1 in question was estimated taking the wear shape into consideration, the degree of wear of the tire during travelling can be accurately estimated regardless of the wear shape of the tire.

The present invention has been described using the embodiments, however, the technical scope of the invention is not limited to the scope described in the embodiments. It is clear to those skilled in the art that various modifications or improvements can be made to the above-described embodiments. It is clear from the claims that such modifications or improvements can also be included in the technical scope of the present invention.

For example, in the above-described first and second embodiments, the rotation angular velocity ω(t) was estimated from the tire radial acceleration $a_R(t)$ and the tire circumferential acceleration $a_T(t)$, however, the rotation angular velocity ω(t) may be directly measured by using an angular velocity sensor such as an oscillation gyroscope. It is preferable to install the angular velocity sensor at the measurement point A.

Also, with respect to the deflection amount d, by disposing a distance sensor on the vehicle equipped with the tire 1 and measuring a distance between the vehicle and the road surface, the deflection amount d may be calculated from the distance between the vehicle and the road surface. Specifically, by converting the distance between the disposed position of the distance sensor and the road surface into a distance between the axle and the road surface and using the converted distance as the effective radius $R_{eff}$, a difference between this effective radius and the tire radius R may be used as the deflection amount d.

In the above-described second embodiment, the wear shape determining means 22 was configured of the support vector machine (SVM), however, other machine learning algorithm such as a logistic regression, a random forest, a neural network, or the like may be used.

In addition, in the above-described second embodiment, it was configured to select the map for estimating the degree of wear by the wear shape. However, it may be configured to prepare only the first $R_c$-$V_R$ map 23N and obtain a correction amount ΔH in advance, which is a difference between the residual groove amount $H_N$ of the case where the wear shape is the even wear and the residual groove amount $H_M$ of the case where the wear shape is the center wear, in both cases, the contact time ratio $R_c$ and the deformation velocity index $V_R$ are the same, and in the case where the wear shape is the center wear, a residual groove amount H' obtained by the first $R_c$-$V_R$ map 23N may be corrected to H = H' + ΔH and output. Incidentally, in the case where the wear shape is not the center wear, no correction is required and H' may be output as it is.

REFERENCE SIGN LIST

1: Tire, 2: Inner liner part, 3: Tire air chamber, 4: Tread,

10: Tire wear estimation device, 11: Sensor case,

11A: First acceleration sensor, 11B: Second acceleration sensor,

12: Acceleration differential waveform arithmetic means,

13: Derivative peak value calculating means,

14: Contact time ratio calculating means,

15: Angular velocity estimating means,

16: Deformation amount calculating means, 17: Memory means,

$17_{M1}$-$17_{Mn}$: $R_c$-$V_R$ maps, 18 Residual groove amount estimating means.

**Claims**

1. A tire wear estimation method for estimating a degree of wear of a tire (1), wherein the degree of wear is estimated by using:

   an index ($V_R$) of deformation velocity at a tire contact edge or in the vicinity of the tire contact edge, the index ($V_R$) of deformation velocity having been calculated from magnitude of one of or both of positive and negative peaks ($P_k$, Pf) appearing in a radial acceleration waveform obtained by differentiating a time-series waveform of tire radial acceleration ($a_R$) detected by an acceleration sensor (11A) mounted on the tire (1);

   a contact time ratio ($R_c$) of contact time ($T_t$) to tire rotation time ($T_r$), the contact time ($T_t$) being a time interval between the positive peak ($P_k$) and the negative peak (Pf), the tire rotation time ($T_r$) being a time interval between either of positive peaks ($P_k$) or negative peaks (Pf); and

   a deformation amount (d) which is a difference between a tire radius (R) and an effective radius ($R_{eff}$), the tire radius (R) being a radius of the tire (1) under a non-loaded state and the effective radius ($R_{eff}$) being a radius of the tire (1) during travelling.

2. The tire wear estimation method according to claim 1, wherein the method comprises measuring the tire radial acceleration ($a_R$), tire circumferential acceleration ($a_T$) and rotation angular velocity ($\omega$), and estimating the deformation amount (d) from a locus of displacement of the tire (1), the displacement having been calculated by using the measured tire radial acceleration ($a_R$) and the measured tire circumferential acceleration ($a_T$), and the measured rotation angular velocity ($\omega$).

3. The tire wear estimation method according to claim 1, wherein the method comprises measuring the tire radial acceleration ($a_R$) and a tire circumferential acceleration ($a_T$), estimating rotation angular velocity ($\omega$) of the tire (1) from the measured tire radial acceleration ($a_R$) and the tire circumferential acceleration ($a_T$), and estimating the deformation amount (d) from a locus of displacement of the tire (1), the deformation having been calculated by using the measured tire radial acceleration ($a_R$) and the tire circumferential acceleration ($a_T$), and the estimated rotation angular velocity ($\omega$).

4. The tire wear estimation method according to claim 1, wherein the effective radius ($R_{eff}$) is calculated from a distance between the vehicle and a road surface detected by a distance sensor mounted on the vehicle equipped with the tire (1).

5. The tire wear estimation method according to any one of claims 1 to 4, wherein the method comprises:

   a step of determining whether the wear shape of the tire (1) is center wear or not by a learning algorithm and from feature amounts which are the deformation velocity index ($V_R$), the contact time ratio ($R_c$) and the deformation amount (d), and

   a step of estimating the degree of wear of the tire (1);

   wherein, in the determination step,

   the determination is made as to whether the wear shape of the tire (1) is the center wear or not, on the basis of the feature amounts and a determination model (21M) which has been obtained in advance and which is structured with, as learning data, feature amount of the tire (1) whose wear shape is the center wear and feature amount of the tire (1) whose wear shape is not the center wear;

   wherein, in the step of estimating the degree of wear of the tire (1),

   in a case where the wear shape of the tire (1) was determined to be the center wear,

   the degree of wear of the tire (1) is estimated by using the calculated deformation velocity index ($V_R$), the contact time ratio ($R_c$), and a relationship, which has been obtained in advance, among the deformation velocity index ($V_R$), the contact time ratio ($R_c$) and the degree of wear of the tire (1) whose wear shape is the center shape, and

   in a case where the wear shape of the tire (1) was determined not to be the center wear,

   the degree of wear of the tire (1) is estimated by using the calculated deformation velocity index ($V_R$), the contact time ratio ($R_c$), and a relationship, which has been obtained in advance, among the deformation velocity index ($V_R$), the contact time ratio ($R_c$) and the degree of wear of the tire (1) whose wear shape is not the center shape.

6. The tire wear estimation method according to any one of claims 1 to 4, wherein the method comprises:

   a step of estimating the degree of wear of the tire (1) by using the deformation velocity index ($V_R$) and the contact time ratio ($R_c$),

a step of determining whether the wear shape of the tire (1) is center wear or not by a machine learning algorithm and from feature amounts which are the deformation velocity index ($V_R$), the contact time ratio ($R_c$) and the deformation amount (d), and

a step of correcting the estimated degree of wear, in a case where the wear shape of the tire (1) was determined to be the center wear,

wherein, in the determination step,

the determination is made as to whether the wear shape of the tire (1) is the center wear or not, on the basis of the feature amounts and a determination model (21M) which has been obtained in advance and which is structured with, as learning data, feature amount of the tire (1) whose wear shape is the center wear and feature amount of the tire (1) whose wear shape is not the center wear; and

wherein, in the correction step,

the estimated wear degree is corrected by using a difference, which has been obtained in advance, between the degree of wear of the tire (1) whose wear shape is the center wear and the degree of wear of the tire (1) whose wear shape is not the center wear.

7. A tire wear shape determination method for determining whether a wear shape of a tire (1) during travelling is center wear or not, the method comprising:

a step of obtaining an index ($V_R$) of deformation velocity at a tire contact edge or in the vicinity of the tire contact edge, the index ($V_R$) of deformation velocity having been calculated from magnitude of one of or both of positive and negative peaks ($P_k$, Pf) appearing in a radial acceleration waveform obtained by differentiating a time-series waveform of tire radial acceleration ($a_R$) detected by an acceleration sensor (11A) mounted on the tire (1);

a step of obtaining a contact time ratio ($R_c$) of contact time ($T_t$) to tire rotation time ($T_r$), the contact time ($T_t$) being a time interval between the positive peak ($P_k$) and the negative peak (Pf), the tire rotation time ($T_r$) being a time interval between either of positive peaks ($P_k$) or negative peaks (Pf);

a step of obtaining a deformation amount (d) which is a difference between a tire radius (R) and an effective radius ($R_{eff}$), the tire radius (R) being a radius of the tire (1) under a non-loaded state and the effective radius ($R_{eff}$) being a radius of the tire (1) during travelling; and

a step of determining, by a machine learning algorithm, whether the wear shape of the tire (1) is the center wear or not, from feature amounts which are the calculated index ($V_R$) of the deformation velocity, the contact time ratio ($R_c$) and the deformation amount (d),

wherein, in the determination step,

the determination is made as to whether the wear shape of the tire (1) is the center wear or not on the basis of the feature amounts and a determination model (21M) which has been obtained in advance and which is structured with, as learning data, the feature amount of the tire (1) whose wear shape is the center wear and the feature amount of the tire (1) whose wear shape is not the center wear.

**Patentansprüche**

1. Reifenverschleiß-Schätzungsverfahren zum Schätzen eines Verschleißgrades eines Reifens (1), wobei der Verschleißgrad durch Verwendung von Folgendem geschätzt wird:

eines Index ($V_R$) der Verformungsgeschwindigkeit an einer Reifenkontaktkante oder in der Nähe der Reifenkontaktkante, wobei der Index ($V_R$) der Verformungsgeschwindigkeit berechnet worden ist aus der Größe einer oder beider von positiven und negativen Spitzen ($P_k$, Pf), die in einer Radialbeschleunigungswellenform erscheinen, die durch Differenzieren einer Zeitreihenwellenform einer Reifenradialbeschleunigung ($a_R$) gewonnen wird, die durch einen Beschleunigungssensor (11A) erfasst wird, der an dem Reifen (1) montiert ist,

eines Kontaktzeitverhältnisses ($R_c$) einer Kontaktzeit ($T_t$) zu einer Reifenrotationszeit ($T_r$), wobei die Kontaktzeit (Tt) eine Zeitspanne zwischen der positiven Spitze ($P_k$) und der negativen Spitze (Pf) ist, die Reifenrotationszeit ($T_r$) eine Zeitspanne zwischen entweder positiven Spitzen ($P_k$) oder negativen Spitzen (Pf) ist, und

eines Verformungsausmaßes (d), das eine Differenz zwischen einem Reifenradius (R) und einem wirksamen Radius ($R_{eff}$) ist, wobei der Reifenradius (R) ein Radius des Reifens (1) unter einem nicht-belasteten Zustand ist und der wirksame Radius ($R_{eff}$) ein Radius des Reifens (1) während des Fahrens ist.

2. Reifenverschleiß-Schätzungsverfahren nach Anspruch 1, wobei das Verfahren das Messen der Reifenradialbeschleunigung ($a_R$), einer Reifenumfangsbeschleunigung ($a_T$) und einer Rotationswinkelgeschwindigkeit ($\omega$) und das Schätzen des Verformungsausmaßes (d) aus einem Verschiebungsort des Reifens (1) umfasst, wobei die Verschiebung berechnet worden ist durch Verwenden der gemessenen Reifenradialbeschleunigung ($a_R$) und der gemessenen Reifenumfangsbeschleunigung ($a_T$) und der gemessenen Rotationswinkelgeschwindigkeit ($\omega$).

3. Reifenverschleiß-Schätzungsverfahren nach Anspruch 1, wobei das Verfahren das Messen der Reifenradialbeschleunigung ($a_R$) und einer Reifenumfangsbeschleunigung ($a_T$), das Schätzen einer Rotationswinkelgeschwindigkeit ($\omega$) des Reifens (1) aus der gemessenen Reifenradialbeschleunigung ($a_R$) und der Reifenumfangsbeschleunigung ($a_T$) und das Schätzen des Verformungsausmaßes (d) aus einem Verschiebungsort des Reifens (1) umfasst, wobei die Verformung berechnet worden ist durch Verwenden der gemessenen Reifenradialbeschleunigung ($a_R$) und der Reifenumfangsbeschleunigung ($a_T$) und der geschätzten Rotationswinkelgeschwindigkeit ($\omega$).

4. Reifenverschleiß-Schätzungsverfahren nach Anspruch 1, wobei der wirksame Radius ($R_{eff}$) aus einem Abstand zwischen dem Fahrzeug und einer Straßenoberfläche berechnet wird, der durch einen Abstandssensor erfasst wird, der an dem Fahrzeug montiert ist, das mit dem Reifen (1) ausgestattet ist.

5. Reifenverschleiß-Schätzungsverfahren nach einem der Ansprüche 1 bis 4, wobei das Verfahren Folgendes umfasst:

   einen Schritt des Feststellens, ob die Verschleißform des Reifens (1) Mittenverschleiß ist oder nicht, durch einen Lernalgorithmus und aus Merkmalsausmaßen, die der Verformungsgeschwindigkeitsindex ($V_R$), das Kontaktzeitverhältnis ($R_c$) und das Verformungsausmaß (d) sind, und
   einen Schritt des Schätzens des Verschleißgrades des Reifens (1),
   wobei, in dem Feststellungsschritt,
   die Feststellung darüber getroffen wird, ob die Verschleißform des Reifens (1) der Mittenverschleiß ist oder nicht, auf der Grundlage der Merkmalsausmaße und eines Feststellungsmodells (21M), das im Voraus gewonnen worden ist und das, als Lerndaten, mit einem Merkmalsausmaß des Reifens (1), dessen Verschleißform der Mittenverschleiß ist, und einem Merkmalsausmaß des Reifens (1), dessen Verschleißform nicht der Mittenverschleiß ist, strukturiert ist,
   wobei, in dem Schritt des Schätzens des Verschleißgrades des Reifens (1),
   in einem Fall, in dem festgestellt wurde, dass die Verschleißform des Reifens (1) der Mittenverschleiß ist,
   der Verschleißgrad des Reifens (1) durch Verwenden des berechneten Verformungsgeschwindigkeitsindex ($V_R$), des Kontaktzeitverhältnisses ($R_c$) und einer Beziehung, die im Voraus gewonnen worden ist, zwischen dem Verformungsgeschwindigkeitsindex ($V_R$), dem Kontaktzeitverhältnis ($R_c$) und dem Verschleißgrad des Reifens (1), dessen Verschleißform der Mittenverschleiß ist, geschätzt wird und
   in einem Fall, in dem festgestellt wurde, dass die Verschleißform des Reifens (1) nicht der Mittenverschleiß ist,
   der Verschleißgrad des Reifens (1) durch Verwenden des berechneten Verformungsgeschwindigkeitsindex ($V_R$), des Kontaktzeitverhältnisses ($R_c$) und einer Beziehung, die im Voraus gewonnen worden ist, zwischen dem Verformungsgeschwindigkeitsindex ($V_R$), dem Kontaktzeitverhältnis ($R_c$) und dem Verschleißgrad des Reifens (1), dessen Verschleißform nicht der Mittenverschleiß ist, geschätzt wird.

6. Reifenverschleiß-Schätzungsverfahren nach einem der Ansprüche 1 bis 4, wobei das Verfahren Folgendes umfasst:

   einen Schritt des Schätzens des Verschleißgrades des Reifens (1) durch Verwenden des Verformungsgeschwindigkeitsindex ($V_R$) und des Kontaktzeitverhältnisses ($R_c$),
   einen Schritt des Feststellens, ob die Verschleißform des Reifens (1) Mittenverschleiß ist oder nicht, durch einen Algorithmus des maschinellen Lernens und aus Merkmalsausmaßen, die der Verformungsgeschwindigkeitsindex ($V_R$), das Kontaktzeitverhältnis ($R_c$) und das Verformungsausmaß (d) sind, und
   einen Schritt des Korrigierens des geschätzten Verschleißgrades, in einem Fall, in dem festgestellt wurde, dass die Verschleißform des Reifens (1) der Mittenverschleiß ist,
   wobei, in dem Feststellungsschritt,
   die Feststellung darüber getroffen wird, ob die Verschleißform des Reifens (1) der Mittenverschleiß ist oder nicht, auf der Grundlage der Merkmalsausmaße und eines Feststellungsmodells (21M), das im Voraus gewonnen worden ist und das, als Lerndaten, mit einem Merkmalsausmaß des Reifens (1), dessen Verschleißform der Mittenverschleiß ist, und einem Merkmalsausmaß des Reifens (1), dessen Verschleißform nicht der Mittenverschleiß ist, strukturiert ist, und
   wobei, in dem Korrekturschritt,
   der geschätzte Verschleißgrad korrigiert wird durch Verwenden einer Differenz, die im Voraus gewonnen worden ist, zwischen dem Verschleißgrad des Reifens (1), dessen Verschleißform der Mittenverschleiß ist, und dem Verschleißgrad des Reifens (1), dessen Verschleißform nicht der Mittenverschleiß ist.

**7.** Reifenverschleißform-Feststellungsverfahren zum Feststellen, ob eine Verschleißform eines Reifens (1) während des Fahrens Mittelverschleiß ist oder nicht, wobei das Verfahren Folgendes umfasst:

einen Schritt des Gewinnens eines Index ($V_R$) der Verformungsgeschwindigkeit an einer Reifenkontaktkante oder in der Nähe der Reifenkontaktkante, wobei der Index ($V_R$) der Verformungsgeschwindigkeit berechnet worden ist aus der Größe einer oder beider von positiven und negativen Spitzen ($P_k$, Pf), die in einer Radialbeschleunigungswellenform erscheinen, die durch Differenzieren einer Zeitreihenwellenform der Reifenradialbeschleunigung ($a_R$) gewonnen wird, die durch einen Beschleunigungssensor (11A) erfasst wird, der an dem Reifen (1) montiert ist,

einen Schritt des Gewinnens eines Kontaktzeitverhältnisses ($R_c$) einer Kontaktzeit (Tt) zu einer Reifenrotationszeit ($T_r$), wobei die Kontaktzeit (Tt) eine Zeitspanne zwischen der positiven Spitze ($P_k$) und der negativen Spitze (Pf) ist, wobei die Reifenrotationszeit ($T_r$) eine Zeitspanne zwischen entweder positiven Spitzen ($P_k$) oder negativen Spitzen (Pf) ist,

einen Schritt des Gewinnens eines Verformungsausmaßes (d), das eine Differenz zwischen einem Reifenradius (R) und einem wirksamen Radius ($R_{eff}$) ist, wobei der Reifenradius (R) ein Radius des Reifens (1) unter einem nicht-belasteten Zustand ist und der wirksame Radius ($R_{eff}$) ein Radius des Reifens (1) während des Fahrens ist, und

einen Schritt des Feststellens, durch einen Algorithmus des maschinellen Lernens, ob die Verschleißform des Reifens (1) der Mittenverschleiß ist oder nicht, aus Merkmalsausmaßen, die der berechnete Index ($V_R$) der Verformungsgeschwindigkeit, das Kontaktzeitverhältnis ($R_c$) und das Verformungsausmaß (d) sind, wobei, in dem Feststellungsschritt,

die Feststellung darüber getroffen wird, ob die Verschleißform des Reifens (1) der Mittenverschleiß ist oder nicht, auf der Grundlage der Merkmalsausmaße und eines Feststellungsmodells (21M), das im Voraus gewonnen worden ist und das, als Lerndaten, mit einem Merkmalsausmaß des Reifens (1), dessen Verschleißform der Mittenverschleiß ist, und einem Merkmalsausmaß des Reifens (1), dessen Verschleißform nicht der Mittenverschleiß ist, strukturiert ist.

## Revendications

**1.** Procédé d'estimation de l'usure d'un pneumatique pour estimer un degré d'usure d'un pneumatique (1), dans lequel le degré d'usure est estimé en utilisant :

un indice ($V_R$) de vitesse de déformation au niveau d'un bord de contact du pneumatique ou au voisinage du bord de contact du pneumatique, l'indice ($V_R$) de vitesse de déformation ayant été calculé à partir de l'amplitude d'un ou de deux pics positifs et négatifs ($P_k$, Pf) apparaissant dans une forme d'onde d'accélération radiale obtenue en différenciant une forme d'onde de série temporelle d'accélération radiale du pneumatique ($a_R$) détectée par un capteur d'accélération (11A) monté sur le pneumatique (1) ;

un rapport de temps de contact ($R_c$) entre le temps de contact (Tt) et le temps de rotation du pneumatique ($T_r$), le temps de contact (Tt) étant un intervalle de temps entre le pic positif ($P_k$) et le pic négatif (Pf), le temps de rotation du pneumatique ($T_r$) étant un intervalle de temps entre des pics positifs ($P_k$) ou des pics négatifs (Pf) ; et

une quantité de déformation (d) qui est une différence entre un rayon du pneumatique (R) et un rayon effectif ($R_{eff}$), le rayon du pneumatique (R) étant un rayon du pneumatique (1) dans un état non chargé, et le rayon effectif ($R_{eff}$) étant un rayon du pneumatique (1) lors du roulement.

**2.** Procédé d'estimation de l'usure d'un pneumatique selon la revendication 1, dans lequel le procédé comprend la mesure de l'accélération radiale du pneumatique ($a_R$), de l'accélération circonférentielle du pneumatique ($a_T$) et d'une vitesse angulaire de rotation ($\omega$), et l'estimation de la quantité de déformation (d) à partir d'un lieu de déplacement du pneumatique (1), le déplacement ayant été calculé en utilisant l'accélération radiale mesurée du pneumatique ($a_R$) et l'accélération circonférentielle mesurée du pneumatique ($a_T$), et la vitesse angulaire de rotation mesurée ($\omega$).

**3.** Procédé d'estimation de l'usure d'un pneumatique selon la revendication 1, dans lequel le procédé comprend la mesure de l'accélération radiale du pneumatique ($a_R$) et d'une accélération circonférentielle du pneumatique ($a_T$), l'estimation de la vitesse angulaire de rotation ($\omega$) du pneumatique (1) à partir de l'accélération radiale du pneumatique ($a_R$) mesurée et de l'accélération circonférentielle du pneumatique ($a_T$), et l'estimation de la quantité de déformation (d) à partir d'un lieu de déplacement du pneumatique (1), la déformation ayant été calculée en utilisant l'accélération radiale mesurée du pneumatique ($a_R$) et l'accélération circonférentielle du pneumatique ($a_T$) et la vitesse de rotation

angulaire estimée ($\omega$).

**4.** Procédé d'estimation de l'usure d'un pneumatique selon la revendication 1, dans lequel le rayon effectif ($R_{eff}$) est calculé à partir d'une distance entre le véhicule et la surface d'une route détectée par un capteur de distance monté sur le véhicule équipé du pneumatique (1).

**5.** Procédé d'estimation de l'usure d'un pneumatique selon l'une quelconque des revendications 1 à 4, dans lequel le procédé comprend :

une étape consistant à déterminer si la forme d'usure du pneumatique (1) est une usure centrale ou non par l'intermédiaire d'un algorithme d'apprentissage et à partir de quantités de caractéristiques qui sont l'indice de vitesse de déformation ($V_R$), le rapport du temps de contact (Rc) et la quantité de déformation (d) ; et une étape d'estimation du degré d'usure du pneumatique (1) ;
dans lequel, lors de l'étape de détermination,
la détermination est effectuée quant à savoir si la forme d'usure du pneumatique (1) est l'usure centrale ou non, sur la base des quantités de caractéristiques et d'un modèle de détermination (21M) qui a été obtenu à l'avance et qui est structuré avec, comme données d'apprentissage, une quantité de caractéristiques du pneumatique (1) dont la forme d'usure est l'usure centrale et une quantité de caractéristique du pneumatique (1) dont la forme d'usure n'est pas l'usure centrale ;
dans lequel, lors de l'étape d'estimation du degré d'usure du pneumatique (1),
dans un cas où la forme d'usure du pneumatique (1) a été déterminée comme étant l'usure centrale :

le degré d'usure du pneumatique (1) est estimé en utilisant l'indice de vitesse de déformation calculé ($V_R$), le rapport du temps de contact ($R_c$), et une relation, qui a été obtenue à l'avance, parmi l'indice de vitesse de déformation ($V_R$), le rapport du temps de contact ($R_c$) et le degré d'usure du pneumatique (1) dont la forme d'usure est la forme centrale, et
dans un cas où la forme d'usure du pneumatique (1) a été déterminée comme n'étant pas l'usure centrale :
le degré d'usure du pneumatique (1) est estimé en utilisant l'indice de vitesse de déformation calculé ($V_R$), le rapport du temps de contact ($R_c$), et une relation, qui a été obtenue à l'avance, parmi l'indice de vitesse de déformation ($V_R$), le rapport du temps de contact ($R_c$) et le degré d'usure du pneumatique (1) dont la forme d'usure n'est pas la forme centrale.

**6.** Procédé d'estimation de l'usure d'un pneumatique selon l'une quelconque des revendications 1 à 4, dans lequel le procédé comprend :

une étape consistant à estimer le degré d'usure du pneumatique (1) en utilisant l'indice de vitesse de déformation ($V_R$) et le rapport de temps de contact ($R_c$) ;
une étape consistant à déterminer si la forme d'usure du pneumatique (1) est une usure centrale ou non par l'intermédiaire d'un algorithme d'apprentissage automatique et à partir de quantités de caractéristiques qui sont l'indice de vitesse de déformation ($V_R$), le rapport du temps de contact (Rc) et la quantité de déformation (d) ; et une étape consistant à corriger le degré d'usure estimé, dans un cas où la forme d'usure du pneumatique (1) a été déterminée comme étant l'usure centrale ;
dans lequel, lors de l'étape de détermination,
la détermination est effectuée quant à savoir si la forme d'usure du pneumatique (1) est l'usure centrale ou non, sur la base des quantités de caractéristiques et d'un modèle de détermination (21M) qui a été obtenu à l'avance et qui est structuré avec, comme données d'apprentissage, la quantité de caractéristiques du pneumatique (1) dont la forme d'usure est l'usure centrale et la quantité de caractéristiques du pneumatique (1) dont la forme d'usure n'est pas l'usure centrale ; et
dans lequel, lors de l'étape de correction,
le degré d'usure estimé est corrigé en utilisant une différence, qui a été obtenue à l'avance, entre le degré d'usure du pneumatique (1) dont la forme d'usure est l'usure centrale et le degré d'usure du pneumatique (1) dont la forme d'usure n'est pas l'usure centrale.

**7.** Procédé de détermination de l'usure d'un pneumatique pour déterminer si une forme d'usure d'un pneumatique (1) au cours du roulement est une usure centrale ou non, le procédé comprenant :

une étape consistant à obtenir un indice ($V_R$) de la vitesse de déformation au niveau d'un bord de contact du pneumatique ou au voisinage du bord de contact du pneumatique, l'indice ($V_R$) de vitesse de déformation ayant été calculé à partir de l'amplitude d'un ou de deux pics positif et négatif ($P_k$, Pf) apparaissant dans une forme d'onde d'accélération radiale obtenue en différenciant une forme d'onde de série temporelle d'accélération radiale du pneumatique ($a_R$) détectée par un capteur d'accélération (11A) monté sur le pneumatique (1) ;

une étape consistant à obtenir un rapport de temps de contact ($R_c$) entre le temps de contact (Tt) et le temps de rotation du pneumatique ($T_r$), le temps de contact (Tt) étant un intervalle de temps entre le pic positif ($P_k$) et le pic négatif (Pf), le temps de rotation ($T_r$) du pneumatique étant un intervalle de temps entre des pics positifs ($P_k$) ou des pics négatifs ($P_f$) ;

une étape consistant à obtenir une quantité de déformation (d) qui est une différence entre le rayon du pneumatique (R) et un rayon effectif ($R_{eff}$), le rayon du pneumatique (R) étant un rayon du pneumatique (1) dans un état non chargé et le rayon effectif ($R_{eff}$) étant un rayon du pneumatique (1) au cours du roulement ; et

une étape consistant à déterminer, par l'intermédiaire d'un algorithme d'apprentissage automatique, si la forme d'usure du pneumatique (1) est l'usure centrale ou non, à partir de quantités de caractéristiques qui sont l'indice calculé ($V_R$) de la vitesse de déformation, le rapport du temps de contact ($R_c$) et la quantité de déformation (d) ;

dans lequel, lors de l'étape de détermination :

la détermination est effectuée quant à savoir si la forme d'usure du pneumatique (1) est l'usure centrale ou non sur la base des quantités de caractéristiques et d'un modèle de détermination (21M) qui a été obtenu à l'avance, et qui est structuré avec, comme données d'apprentissage, la quantité de caractéristiques du pneumatique (1) dont la forme d'usure est l'usure centrale et la quantité de caractéristiques du pneumatique (1) dont la forme d'usure n'est pas l'usure centrale.

FIG.1

10;TIRE WEAR ESTIMATION DEVICE

10B;ARITHMETIC UNIT

11A
FIRST ACCELERATION
SENSOR
(RADIAL DIRECTION;
$a_R(t)$)

12
ACCELERATION
DIFFERENTIAL
WAVEFORM ARITHMETIC
MEANS

13
DERIVATIVE PEAK
VALUE CALCULATING
MEANS

14
CONTACT TIME RATIO
CALCULATING MEANS

15
ANGULAR VELOCITY
ESTIMATING MEANS

16
DEFLECTION AMOUNT
CALCULATING MEANS

18
RESIDUAL GROOVE
AMOUNT ESTIMATING
MEANS

11B
SECOND ACCELERATION
SENSOR
(CIRCUMFERENTIAL
DIRECTION; $a_T(t)$)

17
MEMORY MEANS
17M1 17M2 ···· 17Mn
R-V

FIG.2A                    FIG.2B

1
1 1
3
11A   11B
2
4

$a_R(t)$
A    $a_T(t)$
1 1
1
$\omega(t)$

FIG.3A

FIG.3B

FIG.3C

FIG.4

d=0.035

d=0.03

d=0.025

d=0.02

d=0.015

d=0.01   Full-worn
         (H4=2mm)
                          H=4mm

                          H=6mm

L4
L3
L2                   New
L1                   (H1=8mm)

Derivative Peak

Contact Time Ratio

17M6

17M3

17M2

17M1

$$H = f(R_c, V_R, d)$$
$$(M = H_0 - H)$$

FIG.5

START

DETECT TIRE RADIAL ACCELERATION
AND TIRE CIRCUMFERENTIAL ACCELERATION ⌐S10

CALCULATE ACCELERATION
DIFFERENTIAL WAVEFORM ⌐S11

CALCULATE
DEFORMATION VEROCITY INDEX ⌐S12

CALCULATE CONTACT TIME
AND ROTATION TIME ⌐S13

CALCULATE
CONTACT TIME RATIO ⌐S14

CALCULATE ROTATION
ANGULAR VELOCITY ⌐S15

CALCULATE
DEFLECTION AMOUNT ⌐S16

CALCULATE RESIDUAL
GROOVE AMOUNT ⌐S17

END

FIG.6A

CIRCUMFERENTIAL
ACCELERATION [G]    Tangential Acceleration

FIG.6B

RADIAL
ACCELERATION [G]    Radial Acceleration

FIG.6C

CIRCUMFERENTIAL
VELOCITY [m/sec]    Tangential Velocity

FIG.6D

ANGULAR
VELOCITY[rad/sec]    Angular Velocity

FIG.7A

ROTATION ANGLE[rad]    Rotation Angle

TIME [sec.]

FIG.7B

FRONT-BACK DIRECTION
ACCELERATION[m/s²]    x-Acceleration

TIME [sec.]

FIG.7C

VERTICAL
DIRECTION
ACCELERATION[m/s²]    z-Acceleration

TIME [sec.]

FIG.8A

FRONT-BACK DIRECTION
VELOCITY[m/s]    x-Velocity

TIME [sec.]

FIG.8B

VERTICAL
DIRECTION
VELOCITY[m/s]    z-Velocity

TIME [sec.]

## FIG.9A
FRONT-BACK DIRECTION
DEFORMATION[m]

x-Displacement

FIG.9B

z-Displacement

VERTICAL
DIRECTION
DEFORMATION[m]

## FIG.9C

## FIG.9D

$u_z(t)$

$u_x(t)$

$A$

$R_{fit}$

$O$

$R_{eff}$

$C_{fit}$

FIG.10

```
┌─────────────────────────────────────────────────────────────────────────────┐
│  20;TIRE WEAR ESTIMATION DEVICE                                               │
│      ┌─11A                          ┌─12                        ┌─13          │
│  ┌───────────────────┐   ┌─────────────────────┐   ┌──────────────────┐      │
│  │ FIRST ACCELERATION│   │ ACCELERATION        │   │ DERIVATIVE PEAK  │      │
│  │ SENSOR            │──▶│ DIFFERENTIAL        │──▶│ VALUE CALCULATING│      │
│  │  (RADIAL DIRECTION;│   │ WAVEFORM ARITHMETIC │   │ MEANS            │      │
│  │  aR(t))           │   │ MEANS               │   └──────────────────┘      │
│  └───────────────────┘   └─────────────────────┘          ┌─24              │
│         │     │                      ┌─14            ┌──────────────────┐    │
│         │     │          ┌─────────────────────┐     │ RESIDUAL GROOVE  │    │
│         │     │          │ CONTACT TIME RATIO  │────▶│ AMOUNT ESTIMATING│    │
│         │     │          │ CALCULATING MEANS   │     │ MEANS            │    │
│      ┌─15     │          └─────────────────────┘     └──────────────────┘    │
│  ┌──────────────────┐                     │       ┌─22      ▲      ▲        │
│  │ ANGULAR VELOCITY │─────────────┐       │   ┌──────────────┐              │
│  │ ESTIMATING METANS│             │       ▼   │ WEAR SHAPE   │              │
│  └──────────────────┘             │   ┌───────│ DETERMINATING MEANS │       │
│      ▲   ┌─11B                    │   │       └──────────────┘  ┌─23        │
│  ┌───────────────────┐            ▼   │         ┌──────────────────────┐    │
│  │ SECOND ACCELERATION│   ┌──────────────┐      │ R-V MAP MEMORY MEANS │    │
│  │ SENSOR            │──▶│ DEFLECTION AMOUNT│    │   ┌─23N    ┌─23M     │    │
│  │  (CIRCUMFERENTIAL │   │ CALCULATING MEANS│    │   │Even Map││Center Map│  │
│  │  DIRECTION;aT(t)) │   └──────────────┘        └──────────────────────┘    │
│  └───────────────────┘              ▲   ┌─21                                 │
│                              ┌──────────────────┐                           │
│                              │ IDENTIFICATION   │                           │
│                              │ MODEL MEMORY MEANS│──21M                     │
│                              │ YNSV,λNSV YMSV,λMSV│                          │
│                              └──────────────────┘                           │
└─────────────────────────────────────────────────────────────────────────────┘
```

FIG.11

FIG.12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010186492 A1
- JP 2013136297 A
- JP 2011168211 A
- WO 2009008502 A1